# EUROPÄISCHE PATENTSCHRIFT

(11) **EP 2 217 845 B1**
(45) Veröffentlichungstag und Bekanntmachung des Hinweises auf die Patenterteilung: **27.04.2011**
(21) Anmeldenummer: 08857457.9
(22) Anmeldetag: 21.11.2008
(51) Int. Cl.: F17C 1/00

(54) **BETRIEBSVERFAHREN FÜR EINEN KRYODRUCK-TANK**
OPERATING METHOD FOR A CRYOPRESSURE TANK
PROCÉDÉ PERMETTANT DE FAIRE FONCTIONNER UN RÉSERVOIR CRYOGÉNIQUE À FLUIDE SOUS PRESSION

(30) Priorität: 03.12.2007 DE 102007057978
(43) Veröffentlichungstag der Anmeldung: 18.08.2010
(73) Patentinhaber: Bayerische Motoren Werke Aktiengesellschaft, 80809 München (DE)
(72) Erfinder: BRUNNER, Tobias, 82008 Unterhaching (DE); HAGLER, Dr. Thomas, 80997 München (DE); BASTIAN, Sylvain, 80637 München (DE); SZOUCSEK, Klaus, 85764 Oberschleissheim (DE)
(86) Internationale Anmeldenummer: PCT/EP2008/009890
(87) Internationale Veröffentlichungsnummer: WO 2009/071208

(56) Entgegenhaltungen:
- DE-A1- 4 320 556
- DE-A1- 19 934 457
- US-A- 5 373 700
- US-B1- 6 505 469
- US-B1- 7 201 002

## Beschreibung

Die Erfindung betrifft ein Betriebsverfahren für einen Kryodruck-Tank, in dem kryogener Wasserstoff zur Versorgung eines Verbrauchers, insbesondere einer Brennkraftmaschine und/oder einer Brennstoffzelle eines Kraftfahrzeugs, unter überkritischem Druck bei 13 bar oder mehr gespeichert werden kann, wobei zum Ausgleich des aus der Entnahme von Wasserstoff aus dem Kryodruck-Tank resultierenden Druckabbaus entnommener und in einem Wärmetauscher erwärmter Wasserstoff über ein Tankdruck-Regelventil und eine von einer zum Verbraucher führenden Versorgungsleitung abzweigende Zweigleitung einem im Kryo-Drucktank vorgesehenen Wärmetauscher zugeführt und nach Durchströmen desselben in die Versorgungsleitung stromab des Abzweigs der Zweigleitung eingeleitet wird. Zum Stand der Technik wird insbesondere auf die nicht vorveröffentlichen deutschen Patentanmeldungen 10 2007 011 530.1 und 10 2007 011 742.8 verwiesen, daneben noch auf die US 6,708,502 B1 sowie auf die beim Fahrzeug "Hydrogen 7" der Anmelderin der vorliegenden Patentanmeldung angewendete Technologie.

Stand der Technik beim genannten Fahrzeug "Hydrogen 7", das mit einem sog. Kryo-Tank zur Speicherung von kryogenem Wasserstoff (zur Versorgung des als Brennkraftmaschine ausgeführten Fzg.-Antriebsaggregats) ausgerüstet ist, ist ein "unterkritischer" Speicherbehälter (als Kryo-Tank), der aus einem metallischen Innentank, einem metallischen Außentank und einer dazwischen liegenden Vakuum-Superisolation zur Minderung des Wärmeeintrags in den Innentank besteht. Der typische Betriebsdruck dieses Speicherbehälters liegt zwischen 1 bar absolut und 10 bar absolut, und die Betriebstemperaturen im sog. "kalten Regulärbetrieb" liegen zwischen 20 K (Kelvin) und ca. 30 K, d.h. der im Speicherbehälter bzw. im Innentank desselben enthaltene kryogene Wasserstoff weist diese genannten physikalischen Werte, die im Druck-Dichte-Diagramm des Wasserstoffs im sog. unterkritischen Bereich liegen, auf.

Als nächtliegender Stand der Technik wird DE 4 320 556 A1 angesehen, dessen Gegenstand dem einleitenden Teil von Anspruch 1 entspricht. Weiteren bekannten Stand der Technik stellt die sog. Kryo-Druckspeicherung dar, wozu auf die o.g. US 6,708,502 B1 verwiesen wird, in der verschiedene Arten von isolierten Druckspeichern für kryogene Speichermedien mit inneren und äußeren Diffusionssperren, die einen CFK-Innentank umhüllen, beschrieben sind. Nach diesem Stand der Technik kann der beschriebene sog. Kryo-Druckspeicher mit warmen Druckgas bei 350 bar und niedriger Speicherkapazität oder alternativ mit flüssigem Wasserstoff bei niedrigem Druck von ca. 1 bar (absolut) mit höherer Speicherkapazität befüllt werden.

In den beiden eingangs genannten nicht vorveröffentlichten deutschen Patentanmeldungen ist beschrieben, dass in einem sog. Kryodruck-Tank, der wie der im vorhergehenden Absatz genannte Kryo-Druckspeicher ausgebildet sein kann, tiefkalter kryogener Wasserstoff bei überkritischem Druck, d.h. bei zumindest 13 bar absolut oder signifikant höheren Drücken, nämlich bei 150 bar und mehr, gespeichert bzw. solcher Wasserstoff im Rahmen des Betankens mit überkritischem Druck in einen geeigneten Kryodruck-Tank eingefüllt werden kann. Hinsichtlich der signifikanten Vorteile dieser Technologie insbesondere bei relativ hohen Druckwerten wird auf die Ausführungen in den genannten, nicht vorveröffentlichten Schriften verwiesen.

Es kann erwünscht sein, den Wasserstoff zur Versorgung des Verbrauchers mit einem gewissen Mindest-Druckniveau entnehmen zu können. Beim genannten Fahrzeug "Hydrogen7" wird dieses Mindest-Druckniveau im Tank durch einen gezielten Wärmeeintrag in den Kryo-Tank eingestellt, der dadurch bewerkstelligt wird, dass eine Teilmenge des aus dem Tank entnommenen Wasserstoffs nach Erwärmung desselben in einem externen Wärmetauscher als Wärmeträgermittel durch einen im Kryo-Tank vorgesehenen (internen) Wärmetauscher hindurchgeführt wird, wobei eine Wärmeabgabe an den im Kryo-Tank gespeicherten Wasserstoff erfolgt. Nach Durchströmen dieses internen Wärmetauschers wird der Wärmeträger-Wasserstoff wieder der zum Verbraucher führenden Versorgungsleitung zugeführt. Da der Maximaldruck, der in diesem bekannten Kryo-Tank herrschen darf, relativ niedrig ist, darf nur eine kontinuierlich angepasste Teilmenge von entnommenem und in einem externen Wärmetauscher erwärmten Wasserstoff als Wärmeträgermittel dem im Kryo-Tank vorgesehenen (internen) Wärmetauscher zugeführt werden, weshalb zur angepassten Drosselung bzw. Dosierung der Menge von Wärmeträgemittel ein in Abhängigkeit vom Innendruck im Kryo-Tank angesteuertes Tankdruck-Regelventil vorgesehen ist. Dessen geeignete kontinuierliche Ansteuerung ist jedoch relativ aufwändig.

Für einen Kryodruck-Tank nach dem Oberbegriff des Anspruchs 1, in dem kryogener Wasserstoff unter Absolutdruckwerten in der Größenordnung von 13 bar oder mehr - nämlich bis zu bspw. 350 bar, so wie in der genannten US 6,708,502 B1 erwähnt - gespeichert werden kann, soll hiermit ein demgegenüber vereinfachtes Betriebsverfahren aufgezeigt werden (= Aufgabe der vorliegenden Erfindung).

Die Lösung dieser Aufgabe ist dadurch gekennzeichnet, dass jeweils über eine die Taktzeiten eines üblichen Taktventils signifikant überschreitende Zeitspanne hinweg entweder die entnommene Menge von Wasserstoff nach Erwärmung ohne Beschränkung in den im Kryo-Drucktank vorgesehenen Wärmetauscher geführt wird, wobei das Tankdruck-Regelventil vollständig geöffnet ist, oder überhaupt keine Rückführung von erwärmten Wasserstoff in den im Kryo-Drucktank vorgesehenen Wärmetauscher erfolgt, und dass in der Versorgungsleitung stromab der Abzweigung der Zweigleitung eine Druckregeleinheit vorgesehen ist, die sicherstellt, dass trotz stromauf dieser Druckregeleinheit durch das Schalten des Tankdruck-Regelventils verursachter Änderungen des Drucks in der Versorgungsleitung eine ausreichende und kontinuierliche Versorgung des Verbrauchers mit Wasserstoff unter benötigtem Druck gewährleistet ist.

In der Erkenntnis, dass an einem Kryodruck-Tank, der Innendruck-Werte in der Größenordnung von 150 bar und mehr (bspw. die genannten 350 bar) erlaubt, weitaus größere Schwankungen des Tank-Innendrucks als bspw. an einem Kryo-Tank des eingangs genannten Fahrzeugs "Hydrogen 7" möglich sind, wird anstelle der bekannten aufwändigen Regelung des Tank-Innendrucks für das hierfür vorgesehene Tankdruck-Regelventil eine einfache sog. "Schwarz-Weiß-Betriebsweise" mit langen Taktzeiten vorgeschlagen, dahingehend dass dieses weiterhin in Abhängigkeit vom Innendruck im Kryodruck-Tank angesteuerte Tankdruck-Regelventil jeweils über eine relativ lange Zeitspanne, die die üblichen Taktzeiten eines üblichen Taktventils signifikant überschreitet, abwechselnd entweder vollständig geschlossen oder vollständig geöffnet ist. Entsprechend breit sind daher die Tankdruck-Schwellwerte einer das Tankdruck-Regelventil ansteuernden. d.h. dieses öffnenden bzw. schließenden Regelung zu setzen. Es wurde erkannt, dass die mit einer solchen Regelstrategie zwangsweise größeren bzw. relativ großen Druckschwankungen in einer den aus dem Tank entnommenen Wasserstoff führenden Versorgungsleitung toleriert werden können, wenn in dieser Versorgungsleitung stromab der Abzweigung der genannten Zweigleitung von der Versorgungsleitung eine Druckregeleinheit wie angegeben vorgesehen ist.

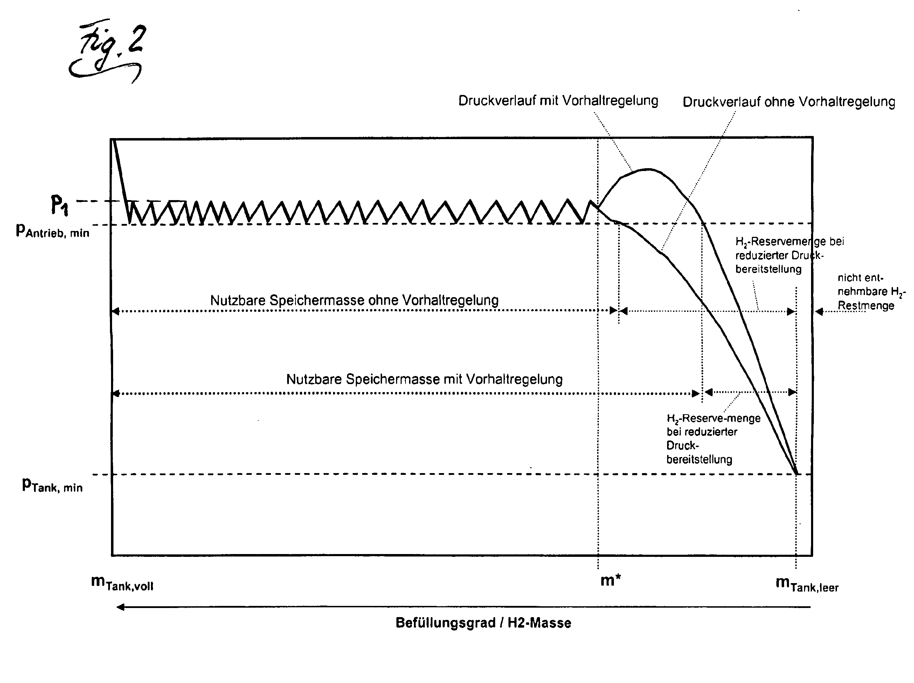

Insbesondere wurde erkannt, dass dann, wenn der Kryodruck-Tank nur noch signifikant teilweise mit einem sog. Teil-Befüllungsgrad, beispielsweise zu weniger als der Hälfte oder zu weniger als 30% gefüllt ist, das genannte Tankdruck-Regelventil kontinuierlich geöffnet bleiben kann, insbesondere auch dann, wenn sich zeitlich nachfolgend ein erhöhter Druckwert im Kryodruck-Tank einstellt, der einen im vorhergehenden Absatz genannten oberen Schwellwert für die Ansteuerung des Tankdruck-Regelventils, genauer für das Schließen desselben, überschreitet. Es wurde erkannt, dass ab einem gewissen systemspezifischen Teil-Befüllungsgrad trotz kontinuierlich geöffnetem Tankdruck-Regelventil und somit nennenswertem Wärmeeintrag über den internen Wärmetauscher in den Tank selbst ein zusätzlicher, nicht vollständig vermeidbarer Wärmeeintrag über die Isolation des Tanks keine kritische Druckerhöhung im Kryodruck-Tank bewirken kann, die einen auslegungsspezifischen Grenzwert für den Tank-Innendruck übersteigen könnte. Über das kontinuierlich offene Tankdruck-Regelventil wird dann eine solch große Menge von Wärme in den Kryodruck-Tank eingebracht, dass eine längere Versorgung des Verbrauchers mit Wasserstoff unter benötigtem höheren Druck möglich ist, als wenn mit Erreichen dieses systemspezifischen Teil-Befüllungsgrads das Tankdruck-Regelventil nicht kontinuierlich, d.h. nicht andauernd geöffnet bliebe. Letzteres bzw. die entsprechende vorgeschlagene Regelstrategie für die Ansteuerung eines Tankdruck-Regelventils wird im weiteren als Vorhalteregelung bezeichnet und anhand der beigefügten **Figur 2** erläutert.

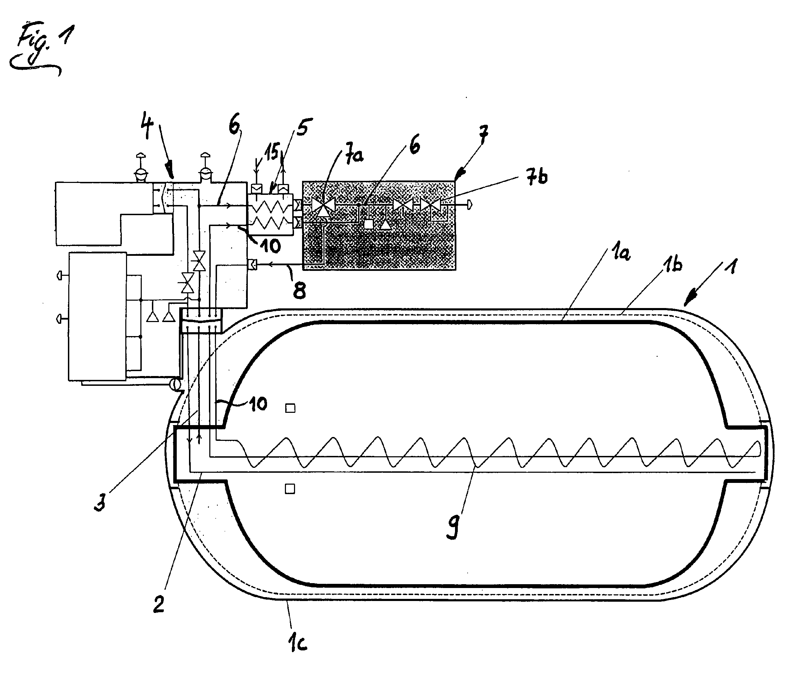

Zunächst sei jedoch auf die beigefügte **Figur 1** verwiesen, in der prinzipiell ein Kryodruck-Tank inklusive seiner für das Verständnis der vorliegenden Erfindung erforderlichen Peripherie dargestellt ist. Dabei ist mit der Bezugsziffer 1 in seiner Gesamtheit ein Kryodruck-Tank gekennzeichnet, in dem kryogener Wasserstoff zur Versorgung eines nicht dargestellten Verbrauchers, beispielsweise einer Brennkraftmaschine und/oder einer Brennstoffzelle eines Kraftfahrzeugs, unter Absolutdruckwerten des Tank-Innendrucks in der Größenordnung von 150 bar oder mehr, zumindest jedoch unter überkritischem Druck bei 13 bar und mehr, gespeichert werden kann. Dieser Kryodruck-Tank 1 besteht aus einem druckfesten Innentank 1a, innerhalb dessen kryogener Wasserstoff gespeichert wird, und ferner aus einer diesen umgebenden Isolationsschicht 1b, in der im wesentlichen Vakuum vorliegt, sowie aus einer dieses Vakuum einschließenden Außenhülle 1 c.

Über eine Befüllleitung 2 kann der Innentank 1a mit kryogenem Wasserstoff unter überkritischem Druck befüllt werden. Über eine Entnahmeleitung 3, die in einer nur grob dargestellten und für die vorliegende Erläuterung nicht wesentlichen Kryo-Ventileinheit 4 mündet, kann Wasserstoff aus dem Innentank 1a entnommen werden. An diese Ventileinheit 4 ist ein erster bzw. externer Wärmetauscher 5 angeschlossen, durch den einerseits ein erster Wärmeträgerkreislauf 15 und zweitens eine sich an die Entnahmeleitung 3 anschließende Versorgungsleitung 6 geführt ist, die letztlich zum bereits genannten Verbraucher führt. Die Versorgungsleitung 6 steht mit dem ersten Wärmeträgerkreislauf 15 in wärmeübertragender Verbindung, so dass der in der Versorgungsleitung 6 geführte Wasserstoff im externen Wärmetauscher 5 erwärmt wird.

An den externen ersten Wärmetauscher 5 schließt sich eine zweite Ventileinheit 7 an. Durch diese zweite Ventileinheit 7 ist die Versorgungsleitung 6 unter Passieren eines Tankdruck-Regelventils 7a sowie einer Druckregeleinheit 7b hindurchgeführt. Vom Tankdruck-Regelventil 7a zweigt eine sog. Zweigleitung 8 ab, durch die aus dem Kryodrucktank 1 entnommener und im ersten Wärmetauscher 5 erwärmter Wasserstoff in einen zweiten, innerhalb des Innentanks 1a des Kryodruck-Tanks 1 vorgesehenen (internen) Wärmetauscher 9 eingeleitet wird. Nach Durchströmen dieses zweiten, im Kryodruck-Tank 1 vorgesehenen Wärmetauschers 9 wird dieser Wasserstoff über eine Rückführleitung 10 in die Versorgungsleitung 6 stromab des Abzweigs der Zweigleitung 8 eingeleitet, wobei diese Rückführleitung 10 zuvor durch den ersten externen Wärmetauscher 5 geführt ist, in dem der im zweiten internen Wärmetauscher 9 abgekühlte Wasserstoff durch Wärmetausch mit dem genannten Wärmeträgerkreislauf 15 wieder erwärmt wird. Es fungiert also der durch die Zweigleitung 8 sowie den zweiten internen Wärmetauscher 9 und die Rückführleitung 10 geführte Wasserstoff als Wärmeträgermittel zur Erwärmung des im Kryodruck-Tank 1 gespeicherten Wasserstoffs, wobei diese Erwärmung durch die Zufuhr von Wärmeträgermittel zum internen Wärmetauscher 9 und somit durch die Schaltstrategie des Tankdruck-Regelventils 7a gesteuert wird, welche der Figurenbeschreibung vorangehend bereits ausführlich erläutert wurde.

**Figur 2** zeigt ein Diagramm, in dem der Verlauf des auf der Ordinate aufgetragenen Tank-Innendrucks über dem auf der Abszisse aufgetragenen Befüllungsgrad des Kryodruck-Tanks 1 aus Figur 1, genauer des Innentanks 1a desselben, als Masse von gespeichertem Wasserstoff ("H2-Masse") dargestellt ist.

Mit "p_{Tank,min}" ist der zugelassene minimale Tank-Innendruck (im Innentank 1a) bezeichnet und mit "p_{Antrieb,min}" der minimale Druckwert, den der aus dem Kryodruck-Tank 1 entnommene Wasserstoff aufweisen muss, um im Verbraucher, hier einer als Fahrzeug-Antriebsaggregat fungierenden Brennkraftmaschine, ohne Funktionsbeschränkung derselben bzw. desselben verwendet werden zu können. Verwendbar ist zwar entnommener Wasserstoff auch noch mit niedrigeren Druckwerten, jedoch ist dann der Verbraucher nur noch beschränkt funktionsfähig, insbesondere kann die maximal mögliche Leistung der Brennkraftmaschine dann nicht mehr erreicht werden.

Mit "m_{Tank,voll}" ist der 100%-Befüllungsgrad des Kryodruck-Tanks 1 bezeichnet, während "m_{Tank,leer}" einen Minimal-Befüllungsgrad kennzeichnet, der unter Betriebs-Randbedingungen physikalisch nicht unterschritten werden kann, d.h. da eine nicht entnehmbare Wasserstoff-(H₂)-Restmenge, die in Fig.2 mit diesen Worten gekennzeichnet ist, im Tank verbleibt, kann dieser selbstverständlich nicht vollständig entleert werden.

Mit "m*" ist ein Teil-Befüllungsgrad des Kryodruck-Tanks 1 gekennzeichnet, bei welchem trotz andauernd geöffnetem Tankdruck-Regelventil 7a aus Figur 1 und weiterem selbstverständlich nicht vollständig unterbindbarem Wärmeeintrag durch die Tank-Isolation (= Isolationsschicht 1b des Tanks 1) hindurch kein einen auslegungsspezifischen Grenzwert überschreitender Druck innerhalb des Innentanks 1a des Kryodruck-Tanks 1 entstehen kann.

Mit vollständig, d.h. zu 100% befülltem Kryodruck-Tank 1 liegt ein hoher Tank-Innendruck vor, der oberhalb des Druckwerts p_{Antrieb,min} liegt. Mit Entnahme von Wasserstoff aus dem Kryodruck-Tank 1 nimmt mit zunächst geschlossenem Tankdruck-Regelventil 7a (und somit nicht durchströmtem internen Wärmetauscher 9 - vgl. Fig.1) der Innendruck im Innentank 1a selbstverständlich ab. Wenn der Druckwert p_{Antrieb,min} erreicht ist, wird eine Maßnahme zur Erhöhung des Innendrucks ergriffen, indem wie geschildert der dann entnommene und erwärmte Wasserstoff als Wärmeträger fungierend durch entsprechendes Schalten des Tankdruck-Regelventils 7a vollständig (d.h. nicht nur ein Teil des Wasserstoff-Stromes) für eine längere Zeitspanne durch den zweiten, innerhalb des Kryodruck-Tanks 1 angeordneten Wärmetauscher 9 geleitet wird. Nachdem sich als Folge hiervon ein gewisser höherer Innendruck p₁ (als oberer Tankdruck-Schwellwert für die regelungstechnische Ansteuerung des Tankdruck-Regeventils 7a) eingestellt hat, wird das Tankdruck-Regelventil 7a wieder in den ursprünglichen Schaltzustand gebracht, in welchem überhaupt kein Wasserstoff von der Versorgungsleitung 6 in die Zweigleitung 8 gelangt, um den Tank-Innendruck nicht weiter ansteigen zu lassen. In diesem geschlossenen Schaltzustand wird das Tankdruck-Regelventil 7a wiederum über eine längere Zeitspanne, die übliche Taktzeiten eines üblichen Taktventils signifikant überschreitet, gehalten, bis abermals der untere Tankdruck-Schwellwert, nämlich der Druckwert p_{Antrieb,min} erreicht ist.

Dieser Prozess des vollständigen Öffnens und Schließens des Tankdruck-Regelventils 7a in Abhängigkeit vom Druck im Innentank 1a wird solange durchgeführt, bis der Teil-Befüllungsgrad m* erreicht ist. Dann wird bzw. bleibt das Tankdruck-Regelventil 7a kontinuierlich, d.h. zeitlich andauernd geöffnet, womit sich bei weiterer Entnahme von Wasserstoff aus dem Innentank 1a der mit den Worten "Druckverlauf mit Vorhalteregelung" gekennzeichnete Druckverlauf einstellt. Würde hingegen das Tankdruck-Regelventil 7a der vorangegangenen, d.h. vor dem Erreichen des Teil-Befüllungsgrades m* durchgeführten Logik folgend angesteuert werden, so stellte sich der mit den Worten "Druckverlauf ohne Vorhalteregelung" gekennzeichnete Druckverlauf ein.

Aus Fig.2 erkennbar ist, dass sich mit Durchführung des vorgeschlagenen und hier als Vorhalteregelung bezeichneten Verfahrens im zugehörigen Druckverlauf (mit Vorhalteregelung) eine Überhöhung des Tank-Innendrucks über den von der vorangegangenen Ansteuerlogik eingestellten höheren Druckwert p₁. hinaus, welcher der obere Schwellwert für die Regelung des Tank-Innendrucks ist, ergibt. Wie man aus einem direkten Vergleich der beiden Druckverläufe mit bzw. ohne Vorhalteregelung ersehen kann, ist die ohne Funktionsbeschränkung des Verbrauchers, d.h. bis zum endgültigen Unterschreiten des Druckwertes p_{Antrieb,min} nutzbare Menge von Wasserstoff, die in Fig.2 mit den Worten "Nutzbare Speichermasse mit bzw. ohne Vorhalteregelung" gekennzeichnet ist, mit Durchführung des vorgeschlagenen Verfahrens, d.h. mit der sog. Vorhaltereglung, signifikant größer als ohne Durchführung dieses vorgeschlagenen Verfahrens. Entsprechend geringer ist bei Durchführung dieser sog. Vorhalteregelung selbstverständlich die mit den Worten "H₂-Reservemenge bei reduzierter Druckbereitstellung" gekennzeichnete Menge von aus dem Tank 1 mit einem Druckwert unterhalb des Wertes p_{Antreib,min}" entnehmbaren Wasserstoffs.

Abgesehen von dem anhand von Fig.2 erläuterten Vorteil zeichnet sich das hier allgemein, d.h. ohne sog. Vorhalteregelung vorgeschlagene Verfahren durch einfachste Umsetzbarkeit mit geringen Anforderungen an die die ausführende Regelung und Technik bzw. an die entsprechenden Bauteile aus. Insbesondere ist die Anzahl der vom Tankdruck-Regelventil 7a durchzuführenden Schaltvorgänge ("auf" bzw. "zu") signifikant geringer als im Falle einer kontinuierlichen Druckregelung auf ein im wesentlichen konstantes Druckniveau, welches beim eingangs genannten Fahrzeug "Hydrogen 7" praktiziert wird. Vorliegend können in Abhängigkeit von der aus dem Innentank entnommenen Menge von Wasserstoff die Schaltzeiten des Tankdruck-Regelventils 7a in der Größenordnung von 15 Minuten und mehr, also signifikant über den üblichen Taktzeiten eines üblichen Taktventils liegen, während sich der obere und untere Schwellwert für die Ansteuerung des Tankdruck-Regelventils 7a um bspw. 10 bar und mehr voneinander unterscheiden können, d.h. (p₁ - p_{Antrieb,min} ≥10 bar), wobei noch darauf hingewiesen sei, dass dies sowie eine Vielzahl von Details durchaus abweichend von obigen Erläuterungen gestaltet sein kann, ohne den Inhalt der Patentansprüche zu verlassen.

## Patentansprüche

1. Betriebsverfahren für einen Kryodruck-Tank (1), in dem kryogener Wasserstoff zur Versorgung eines Verbrauchers, insbesondere einer Brennkraftmaschine und/oder einer Brennstoffzelle eines Kraftfahrzeugs, unter überkritischem Druck bei 13 bar oder mehr gespeichert werden kann, wobei zum Ausgleich des aus der Entnahme von Wasserstoff aus dem Kryodruck-Tank (1) resultierenden Druckabbaus entnommener und in einem Wärmetauscher (5) erwärmter Wasserstoff über ein Tankdruck-Regelventil (7a) und eine von einer zum Verbraucher führenden Versorgungsleitung (6) abzweigende Zweigleitung (8) einem im Kryo-Drucktank (1) vorgesehenen Wärmetauscher (9) zugeführt und nach Durchströmen desselben in die Versorgungsleitung (6) stromab des Abzweigs der Zweigleitung (8) eingeleitet wird, **dadurch gekennzeichnet, dass** jeweils über eine die Taktzeiten eines üblichen Taktventils signifikant überschreitende Zeitspanne hinweg entweder die entnommene Menge von Wasserstoff nach Erwärmung ohne Beschränkung in den im Kryo-Drucktank (1) vorgesehenen Wärmetauscher (9) geführt wird, wobei das Tankdruck-Regelventil (7a) vollständig geöffnet ist, oder überhaupt keine Rückführung von erwärmten Wasserstoff in den im Kryo-Drucktank (1) vorgesehenen Wärmetauscher (9) erfolgt,
wobei die genannte Zeitspanne der vollständigen Öffnung des Tankdruckregelventils (7a) durch die Dauer des Druckabfalls zwischen einem höheren Tank-Innendruck (p1) als oberem Tankdruck-Schwellwert für die regelungstechnische Ansteuerung des Tankdruck-Regelventils (7a) und einem unteren Tankdruck-Schwellwert in Form des minimalen Druckwerts (p_{Antrieb,min}). den der aus dem Kryodruck-Tank (1) entnommene Wasserstoff aufweisen muss, um im Verbraucher ohne Funktionsbeschränkung desselben verwendet werden zu können, definiert ist,
und dass in der Versorgungsleitung (6) stromab der Abzweigung der Zweigleitung (8) eine Druckregeleinheit (7b) vorgesehen ist, die sicherstellt, dass trotz stromauf der Druckregeleinheit (7b) durch das Schalten des Tankdruck-Regelventils (7a) verursachter Änderungen des Drucks in der Versorgungsleitung (6) eine ausreichende und kontinuierliche Versorgung des Verbrauchers mit Wasserstoff unter benötigtem Druck gewährleistet ist.

2. Betriebsverfahren nach Anspruch 1,
**dadurch gekennzeichnet, dass** mit Erreichen eines Teil-Befüllungsgrades (m*) des Kryodruck-Tanks (1), bei welchem trotz weiteren Wärmeeintrags auch durch die Tank-Isolation kein einen auslegungsspezifischen Grenzwert übersteigender Druck innerhalb des Kryodruck-Tanks (1) entstehen kann, das Tankdruck-Regelventil (7a) kontinuierlich geöffnet bleibt.

## Claims

1. An operating method for a cryo-compressed tank (1), in which cryogenic hydrogen to supply a consumer, especially an internal combustion engine and/or a fuel cell of a motor vehicle, can be stored at supercritical pressure at 13 bar or more, wherein to compensate the pressure loss resulting from the removal of hydrogen from the cryo-compressed tank (1), the removed hydrogen that has been heated in a heat exchanger (5) is supplied via a tank pressure regulating valve (7a) and a branch line (8) branching off from a supply line (6) leading to the consumer to a heat exchanger (9) provided in the cryo-compressed tank (1) and after flowing through the heat exchanger is introduced into the supply line (6) downstream of the branching off of the branch line (8), **characterised in that**, in each case over a time span significantly exceeding the cycle times of a conventional frequency valve, either the removed quantity of hydrogen is guided after heating without limitation into the heat exchanger (9) provided in the cryo-compressed tank (1), the tank pressure regulating valve (7a) being completely open, or no return of heated hydrogen into the heat exchanger (9) provided in the cryo-compressed tank (1) occurs at all, the time span mentioned of the complete opening of the tank pressure regulating valve (7a) being defined by the period of the pressure drop between a higher internal tank pressure (p1) than the upper tank pressure threshold value for the technical regulating activation of the tank pressure regulating valve (7a), and a lower tank pressure threshold value in the form of the minimum pressure value (p_{drive.min}), which the hydrogen removed from the cryo-compressed tank (1) has to have in order to be able to be used in the consumer without functional limitation thereof, and **in that** provided in the supply line (6) downstream of the branching off of the branch line (8) is a pressure regulating unit (7b), which ensures that despite changes to the pressure in the supply line (6) upstream of the pressure regulating unit (7b) caused by the switching of the tank pressure regulating valve (7a), an adequate and continuous supply of the consumer with hydrogen under the required pressure is ensured.

2. An operating method according to claim 1, **characterised in that** on reaching a partial filling degree (m*) of the cryo-compressed tank (1), at which despite further heat input also through the tank insulation no pressure exceeding a design-specific limit value can occur within the cryo-compressed tank (1), the tank pressure regulating valve (7a) remains continuously open.

## Revendications

1. Procédé de gestion d'un réservoir cryogénique (1) contenant de l'hydrogène à l'état cryogénique pour alimenter un utilisateur, notamment un moteur thermique et/ou une pile à combustible d'un véhicule automobile sous une pression surcritique de 13 bars ou plus,
pour compenser la diminution de pression résultant du prélèvement d'hydrogène dans le réservoir cryogénique (1) qui fournit de l'hydrogène réchauffé dans un échangeur de chaleur (5) par une vanne de régulation de pression de réservoir (7a) et une conduite de dérivation (8) issue de la conduite d'alimentation (6) reliée à l'utilisateur à un échangeur de chaleur (9) prévu dans le réservoir cryogénique (1) et après traversée de celui-ci, arrive dans la conduite d'alimentation (6) en aval de la dérivation de la conduite de dérivation (8),
procédé **caractérisé en ce que**
- chaque fois pendant une durée qui dépasse de manière significative les temps de cadence d'une vanne cadencée usuelle, on fait passer soit la quantité prélevée d'hydrogène après réchauffage, sans limite dans l'échangeur de chaleur (9) prévu dans le réservoir cryogénique (1),
- la soupape de régulation de pression de réservoir (7a) étant complètement ouverte ou encore sans aucun retour d'hydrogène réchauffé dans l'échangeur de chaleur (9) prévu dans le réservoir cryogénique (1),
- on définit la durée d'ouverture complète de la soupape de régulation de pression de réservoir (7a) par la durée de la chute de pression entre une pression élevée interne au réservoir (p1) constituant le seuil supérieur de la pression de réservoir pour la commande régulée de la soupape de régulation de pression de réservoir (7a) et un seuil inférieur de pression de réservoir sous la forme de la pression minimale (p_{Antrieb}, ₘᵢₙ), que doit présenter l'hydrogène prélevé dans le réservoir cryogénique (1) pour être utilisable par le consommateur sans en limiter le fonctionnement, et
- dans la conduite d'alimentation (6) en aval de la dérivation de la conduite de dérivation (8), il est prévu une unité de régulation de pression (7b) qui garantit que malgré la variation de pression occasionnée en amont de l'unité de régulation de pression (7b) par la commutation de la soupape de régulation de pression de réservoir (7a), dans la conduite d'alimentation (6), il y aura une alimentation suffisante et continue de l'utilisateur avec de l'hydrogène sous la pression requise.

2. Procédé de gestion selon la revendication 1,
**caractérisé en ce que**
lorsqu'on atteint un degré de remplissage partiel (m*) du réservoir cryogénique (1) pour laquelle, malgré la poursuite de l'apport calorifique l'isolation du réservoir ne peut générer une pression dans le réservoir cryogénique (1) dépassant la valeur limite correspondant à sa conception, la soupape de régulation de pression de réservoir (7a) reste ouverte en continu.
